# EUROPEAN PATENT SPECIFICATION

(11) **EP 3 275 128 B1**
(45) Date of publication and mention of the grant of the patent: **20.02.2019**
(21) Application number: 16713765.2
(22) Date of filing: 16.03.2016
(51) Int. Cl.: H04L 12/28, H05B 37/02

(54) **CONTEXT-RELATED COMMISSIONING OF LIGHTING DEVICES**
KONTEXTBEZOGENE INBETRIEBNAHME EINER BELEUCHTUNGSVORRICHTUNG
MISE EN SERVICE LIÉE AU CONTEXTE DE DISPOSITIF D'ÉCLAIRAGE

(30) Priority: 26.03.2015 EP 15160965
(43) Date of publication of application: 31.01.2018
(73) Proprietor: Philips Lighting Holding B.V., 5656 AE Eindhoven (NL)
(72) Inventor: TIBERI, Luca, 5656 AE Eindhoven (NL); GARCIA MORCHON, Oscar, 5656 AE Eindhoven (NL); MASON, Jonathan, David, 5656 AE Eindhoven (NL); VONCKEN, Ralf, Gertruda, Hubertus, 5656 AE Eindhoven (NL); DRAAIJER, Maurice, Herman, Johan, 5656 AE Eindhoven (NL); MAGIELSE, Remco, 5656 AE Eindhoven (NL); SHRUBSOLE, Paul, Anthony, 5656 AE Eindhoven (NL); CHRAIBI, Sanae, 5656 AE Eindhoven (NL); ALIAKSEYEU, Dzmitry, Viktorovich, 5656 AE Eindhoven (NL)
(74) Representative: Verweij, Petronella Daniëlle
(86) International application number: PCT/EP2016/055728
(87) International publication number: WO 2016/150798

(56) References cited:
- EP-A1- 1 760 013
- WO-A1-2015/022650
- WO-A2-2009/128001
- WO-A2-2013/085600

## Description

### FIELD OF THE INVENTION

The invention relates to a system and a method for commissioning a lighting device. The invention further relates to a wearable device for use in the system. The invention further relates to a computer program product for performing the method.

### BACKGROUND OF THE INVENTION

Future and current home and professional environments will contain a large number of controllable lighting devices for creation of ambient, atmosphere, accent or task lighting. Once these lighting devices are installed, the lighting system needs to be commissioned in order to associate each physical lighting device with a room, a location or a type of lighting device. The lighting system gathers information (e.g. positional information) of the lighting devices and it may communicate this information throughout the control network to control devices, providing the control devices the required information about the lighting devices. Patent application US 20090066473 A1 discloses a method and an apparatus for commissioning devices according to an installation plan. The spatial position of each device is mapped and compared with a building services plan, thereby obtaining a map of the spatial distribution of the devices.

Patent application WO 2015022650 A1 relates to a mobile computing device for receiving user input indicative of a desired lighting property adjustment for a lighting effect sensed by a light sensor of the mobile computing device. The mobile computing device identifies one or more LED-based lighting units that contribute to the sensed lighting effect. The mobile computing device then generates, for wireless transmission to the one or more contributing LED-based lighting units, an instruction configured to cause at least some of the one or more contributing LED-based lighting units to implement the desired lighting property adjustment. The user input for lighting property adjustment may be based on a movement detected by a sensor in the mobile computing device. The user input for lighting property adjustment may also be triggered based on an environmental cue (e.g. a location). Such user input sensors may be located in a wearable device that is connected to the mobile computing device. The mobile computing device may also commission lighting units, for example based on coded light signals received from the lighting units, which coded light signal may comprise the location of the lighting unit, or the location of the lighting unit may be determined based on the location of the mobile computing device.

### SUMMARY OF THE INVENTION

The invention relates to a system for commissioning a lighting device by a wearable device according to claim 1. A method of commissioning a lighting device by a wearable device is define by claim 9. Further aspects of the invention are defined by the dependent claims.

The system provides the advantage that it is able to detect context-related conditions of the lighting device by detecting context-related conditions of the wearable device. Upon completion of the commissioning of the lighting device, the context-related conditions are stored in the memory along with the identifier, which enables the system, or a further system or device, to access and retrieve the stored information about all lighting devices commissioned via the system, whereafter the lighting devices are ready to be controlled. Many available wearable consumer devices today are already equipped with one or more sensors, which may be beneficial because these integrated sensors may be used for detecting the contextual information. An advantage of this system is that a commissioning user no longer has to provide information about the lighting device manually, because the system automatically detects and stores information of the lighting device.

The detection unit is arranged for detecting contextual information of the wearable device. The contextual information is related to the context wherein the lighting device is installed, and the detection unit detects the contextual information in order to identify the context. For example, the detection unit may detect the location, orientation, movement, height, light conditions, temperature, distance to walls, ceiling and/or floor, etc. of the wearable device when installing the lighting device.

The processor is arranged for determining at least one installation characteristic of the lighting device based on the detected contextual information of the wearable device. Each installation characteristic is therefore derived from the contextual information detected by the detection unit. Examples of installation characteristics of the lighting device may be, for example, the height, tilt, orientation and position of the lighting device.

The wearable device is arranged to be worn on at least one of the group comprising a lower arm, a wrist, a hand and a finger of a user installing the lighting device. Installing a lighting device is often done by hand. Therefore, wearing the wearable device around the forearm, wrist, hand or finger provides the advantages that the wearable device may be in close vicinity of the hand of the person installing the lighting device. Thus, the contextual information of the wearable device corresponds more closely to the contextual information of the lighting device. This enables the processor to determine the at least one installation characteristic of the lighting device accurately.

In an embodiment of the system, the detection unit is arranged for detecting an orientation of the wearable device as the contextual information, and the processor is arranged for determining the at least one installation characteristic of the lighting device based on the orientation of the wearable device. Determining the orientation of the wearable device during the installation of the lighting device is beneficial because it allows the processor to determine the orientation of the lighting device. The orientation of the wearable device during installation of the lighting device may be, for example, vertical (up/down), enabling the processor to determine that the lighting device is installed in for example the ceiling (up) or in the floor (down). This installation characteristic linked to the identifier of the lighting device may be stored in the memory by the processor.

Additionally or alternatively, the detection unit is arranged for detecting a movement of the wearable device, and the processor is arranged for determining the at least one installation characteristic of the lighting device based on the movement of the wearable device. Determining the movement of the wearable device during the installation of the lighting device is beneficial because it allows the processor to determine how the lighting device is installed. The detection unit may, for example, determine the movement of the wearable device and relate this movement to a specific lighting device. For example, the detection unit may detect the number of rotations of the wearable device while installing the lighting device, enabling the processor to infer that the installed lighting device is a for example light bulb (and not a fluorescent tube, LED strip or TLED). This installation characteristic, related to the identifier of the lighting device, may be stored in the memory by the processor.

In an embodiment of the system, the system further comprises a positioning system. The wearable device is further arranged for receiving positional information from the positioning system, and the processor is arranged for determining the at least one installation characteristic based on the received positional information. Determining the location of the wearable device, and thereby the location of the lighting device is advantageous because it allows the system, or a further system or device, to control the lighting device based on its location. Another benefit of this embodiment is that when a plurality of lighting devices are installed, the system is able to generate a map of the plurality of lighting devices, whereafter the map may, for example, be linked to a building management plan.

Additionally, the detection unit of the wearable device comprises an altitude detector (e.g. an altitude sensor) for determining the vertical location of the lighting device, and the processor is arranged for determining the at least one installation characteristic based on the vertical location. This is beneficial because the processor may for example determine the function of the lighting device based on its height (e.g. a lighting device located at ceiling level may have a different functionality than a lighting device located on floor level).

In an embodiment of the system, the processor is arranged for determining a type of the lighting device based on the at least one installation characteristic. Based on the at least one installation characteristic the processor may determine that the lighting device is, for example, a light bulb, a TLED, an occupancy sensor, a microphone, etc. This information may be stored in the memory for future reference, which is advantageous because it allows the system, or a further device, to retrieve this information. The system, or the further device, may use this information to, for example, determine the control options of the lighting device.

In an embodiment of the system, the processor is further arranged for activating and deactivating a commissioning mode of the wearable device. The commissioning mode is a mode of operation wherein the processor is set to determine the at least one installation characteristic of the lighting device based on the detected contextual information of the wearable device, and wherein the processor is set to link the at least one installation characteristic to the identifier. It is advantageous to enter/exit a commissioning mode during installation because this allows the system to differentiate between lighting devices (the commissioning mode may for example be turned off and on in between the commissioning of two lighting devices). It further allows the system to determine when to detect the contextual information via the detection unit and to receive the identifier from the lighting device, resulting in that the at least one installation characteristic is linked to the correct lighting device.

In a further embodiment of the system, the processor is arranged for activating and/or deactivating the commissioning mode based on the contextual information of the wearable device detected by the detection unit. The detection of specific contextual information of the wearable device (e.g. a specific movement, orientation or location of the wearable device) may trigger the activation of the commissioning mode automatically. Automatically detecting when a person intends to install/commission a lighting device provides the advantage that no intentional user input is required to activate the commissioning mode. After the commissioning is complete (i.e. after determining the at least one installation characteristic of the lighting device and receiving the identifier from the lighting device) the processor may determine, based on specific contextual information of the wearable device, that commissioning has been successful and thereby decide to deactivate the commissioning mode and store the at least one installation characteristic and the identifier of the lighting device in the memory.

In an additional or alternative embodiment of the system, the system further comprises a user interface arranged for receiving user input. The processor is further arranged for activating the commissioning mode based on a first user input, and the processor is further arranged for deactivating the commissioning mode based on a second user input. An advantage of intentional user input for activating or deactivating the commissioning mode is that it provides the commissioning user more control. Furthermore, it may allow a user to overrule an automatically activated/deactivated commissioning mode.

In an embodiment of the system, the receiver is arranged for receiving the identifier of the lighting device from the lighting device via at least one of the group comprising: an electronic signal, a light signal, a radio signal and a sound signal. The received signal may be an electronic signal, which may be advantageous in an embodiment wherein the receiver is physically coupled to the lighting device. In an embodiment wherein the receiver comprises a camera or a light sensor, the receiver may receive the identifier via a coded light signal, the coded light signal comprising the identifier of the lighting device. This embodiment may be beneficial because many consumer lighting devices today are already arranged for emitting a coded light signal, thereby possibly simplifying the communication between the lighting device and the receiver. In a further embodiment, the receiver may be arranged for receiving the identifier via a radio signal. An advantage of using a radio signal is that many wearable consumer devices and lighting devices are arranged for radio communication (e.g. via Wi-Fi, Bluetooth, NFC, ZigBee, etc.). In an additional or alternative embodiment, the receiver is arranged for receiving a sound signal from the lighting device, the sound signal comprising the identifier. The sound signal may be generated by an audio emitting element in the lighting device, or the physical connection between the lighting device and its fixture may emit a sound comprising the identifier, or the physical connection between the lighting device and its fixture may emit a sound indicating a type of lighting device (e.g. inserting an occupancy sensor in a socket may emit a distinguishable sound).

According to a second aspect of the present invention the object is achieved by a wearable device for use in a system according to the system of any one of the above-mentioned embodiments. The wearable device comprises a detection unit arranged for detecting an orientation and/or a movement of the wearable device, and the wearable device is further arranged for communicating the orientation and/or the movement to the processor of the system. The wearable device may comprise the receiver according to the receiver of any one of the above-mentioned embodiments. Additionally or alternatively, the wearable device may comprise the processor according to the processor of any one of the above-mentioned embodiments. Additionally or alternatively, the wearable device may comprise the memory according to the memory of any one of the above-mentioned embodiments. Many wearable consumer devices today are already equipped with sensing means, communication means, processing means and/or storing means. Thus, using the components of an existing wearable device is advantageous because it optimizes hardware usage.

According to a third aspect of the present invention the object is achieved by a method of commissioning a lighting device by a wearable device when installing the lighting device, which wearable device is arranged to be worn on at least one of the group comprising a forearm, a wrist, a hand and a finger of a user installing the lighting device. The method comprises the steps of:
- receiving an identifier of the lighting device,
- detecting contextual information of the wearable device, the contextual information being an orientation and/or a movement of the wearable device,
- determining at least one installation characteristic of the lighting device based on the detected contextual information of the wearable device,
- linking the at least one installation characteristic to the identifier, and
- storing the at least one installation characteristic and the identifier.

In embodiments of the method, the method further comprises the step of grouping a first lighting device with a second lighting device if the first lighting device and the second lighting device have a similar installation characteristic. The advantage of grouping the lighting devices automatically is that it later allows the system, or a further device, to control multiple lamps at the same time (e.g. three lamps located in one luminaire).

According to a fourth aspect of the present invention the object is achieved by a computer program product. The computer program product comprises computer program code to perform any method according to the invention or the functionality of any one of the above-mentioned embodiments when the computer program product is run on a processing unit of a computing device, for example on the processing unit of the system, or on the processing unit of the wearable device.

### BRIEF DESCRIPTION OF THE DRAWINGS

The above, as well as additional objects, features and advantages of the disclosed systems, devices, methods and computer program product, will be better understood through the following illustrative and non-limiting detailed description of the embodiments of the systems, devices and methods, with reference to the appended drawings, in which:
Fig. 1 shows schematically an embodiment of a system according to the invention for commissioning a lighting device by a wearable device;
Fig. 2 shows schematically an embodiment of a wearable device according to the invention for commissioning a lighting device;
Fig. 3 shows schematically an embodiment of a wrist worn wearable device according to the invention for commissioning a bulb lighting device;
Fig. 4 shows schematically an embodiment of a finger worn wearable device according to the invention for commissioning a tube lighting device;
Fig. 5 shows schematically an embodiment of a system according to the invention for commissioning lighting devices by a wearable device, the system further comprising a positioning system; and
Fig. 6 shows schematically and exemplary a method of commissioning a lighting device by a wearable device;

All the figures are schematic, not necessarily to scale, and generally only show parts which are necessary in order to elucidate the invention, wherein other parts may be omitted or merely suggested.

### DETAILED DESCRIPTION OF EMBODIMENTS

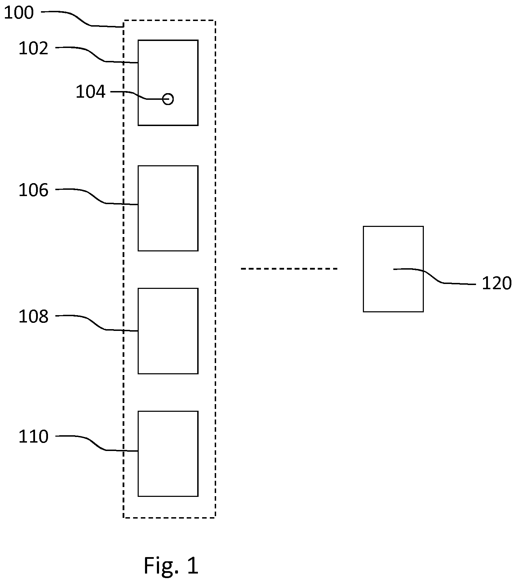

Fig. 1 shows schematically an embodiment of a system 100 according to the invention for commissioning a lighting device 120 by a wearable device 102 when installing the lighting device 120. The system 100 comprises the wearable device 102 comprising a detection unit 104 arranged for detecting contextual information of the wearable device 102, the contextual information being an orientation and/or a movement of the wearable device. The system 100 further comprises a receiver 106 arranged for receiving an identifier of the lighting device 120. The system 100 further comprises a processor 108 arranged for determining at least one installation characteristic of the lighting device 120 based on the detected contextual information of the wearable device 102, and for linking the at least one installation characteristic to the identifier. The system 100 also comprises a memory 110 arranged for storing the at least one installation characteristic and the identifier. Upon storing the at least one installation characteristic, the lighting device 120 may be ready to be controlled by any type of control device that is connected to the lighting device 120. The wearable device 102, the receiver 106, the processor 108 and the memory 110 may be interconnected by any kind of communication technology. Various wired and wireless communication technologies that are known in the art may be used, for example Ethernet, DMX, DALI, Bluetooth, Wi-Fi or ZigBee. A specific communication technology may be selected based on the communication capabilities of the processor 108, the type of lighting device 120, the type of wearable device 102, etc., the power consumption of the communication driver for the (wireless) communication technology and/or the communication range of the signals.

The wearable device 102 may be any suitable wearable device 102. The type of wearable device 102 (e.g. a bracelet, a ring, glasses, gloves, pendants, etc.) maybe selected in relation to the context wherein the wearable device 102 will be used. The wearable device 102 comprises the detection unit 104 arranged for detecting contextual information of the wearable device 102 (e.g. the orientation, location, movement, etc.). The processor 108 of the system 100 further translates the contextual information detected by the detection unit 104 and determines the at least one installation characteristic (e.g. location, orientation, type of lighting device 120, etc.) of the lighting device 120 based on the contextual information. The wearable device 102 may further comprise a battery (not shown) for powering the different components of the wearable device 102.

The lighting device 120 may be arranged for emitting light. The lighting device 120 may comprise a light source arranged for emitting light. The lighting device 120 may be an LED bulb, an LED strip, a TLED, a Philips Hue lamp, an incandescent lamp, a fluorescent lamp, a high-intensity discharge lamp, etc. The lighting device 120 may be arranged for providing task lighting, ambient lighting, atmosphere lighting, accent lighting, etc. Alternatively, the lighting device may be arranged for controlling another lighting device. The lighting device 120 may be for example an occupancy sensor, an audio sensor, a vibration sensor, a motion sensor, etc.

In an embodiment, the detection unit 104 of the wearable device 102 is arranged for detecting an orientation of the wearable device 102 as the contextual information. The orientation of the wearable device 102 may be detected by an orientation sensor (e.g. a gyroscope, tilt sensor, magnetometer, etc.). Based on the information received from the orientation sensor, the processor 108 may determine the orientation of the lighting device 120 and determine whether the lighting device 120 is installed in a horizontal, vertical or diagonal position. This may allow the processor 108 to further determine whether the lighting device 120 is installed in/on a ceiling, in/on a wall or in/on a floor.

In an embodiment, the detection unit 104 of the wearable device 102 is arranged for detecting a movement of the wearable device 102 as the contextual information. The movement of the wearable device 102 may be detected by a motion sensor (e.g. an accelerometer). Based on the information received from the motion sensor, the processor 108 may determine the movement of the wearable device 102 and determine an installation characteristic of the lighting device 120 based on the movement. The movement may, for example, be a movement comprising a plurality of rotations, possibly indicating that the lighting device 120 is a light bulb (e.g. a Philips Hue bulb, a retrofit light bulb, etc.). In another example the movement may comprise: (1) a forward motion, (2) a 45 degree clockwise rotation with a sharp deceleration at the end and (3) a reverse motion. Combined with the information received from an orientation sensor, the processor 108 may, in this example, determine that the lighting device 120 is a tubular lighting device 120 (e.g. a fluorescent tube lamp, a TLED, etc.).

In an embodiment, the system 100 further comprises a positioning system. The positioning system may be for example an indoor positioning system that determines the location of an object based on radio waves, magnetic fields, acoustic signals, (coded) light signals or any other sensory information collected by the object. In this embodiment, the wearable device 102 is further arranged for receiving positional information from the positioning system. This allows the processor 108 to determine the location of the wearable device 102 during installation of the lighting device 120 and to, based on the location of the wearable device 102, determine the location of the lighting device 120. The processor 108 may further store the location of the lighting device 120 in the memory 110 as the installation characteristic. The processor 108 may be further arranged for determining the vertical location (i.e. the height) of the wearable device 102 (and therewith the vertical location of the lighting device 120) based on the received positional information.

In an embodiment, the detection unit 104 of the wearable device 102 is arranged for detecting the altitude of the wearable device 102. The altitude of the wearable device 102 may be detected by an altitude sensor (e.g. a (milli)barometric pressure sensor). Based on the information received from the altitude sensor, the processor 108 may determine the altitude of the wearable device 102 and determine an installation characteristic of the lighting device 120 based on the altitude. The information from the altitude sensor may be combined with the information from other sensors, for example information from the orientation sensor, thereby enabling the processor 108 to determine the altitude and the orientation of the lighting device 120. Thus, allowing the processor 108 to determine, for example, that a lighting device 120 is installed in a wall (based on the (horizontal) orientation of the wearable device 102) on eye level (based on the altitude of the wearable device 102). In another example, the altitude information may be combined with positional information from the positioning system. This may allow the processor 108 to determine that a lighting device 120 is installed in the ceiling (based on the altitude of the wearable device 102) and the processor 108 may further determine that the lighting device 120 is located, for example, in a corner of the room (based on the position of the wearable device 102).

In an embodiment, the detection unit 104 of the wearable device 102 is arranged for detecting sound. The sound may be detected by an audio sensor (e.g. a microphone). The audio sensor may detect sounds originating from the lighting device 120 or sounds generated when the lighting device 120 is physically connected to its socket (e.g. a clicking sound from a PoE luminaire with a RJ45 connector, or a unique sound of a screw/bayonet fitting). The physical connection of the lighting device 120 to its socket may generate a distinguishing sound signature that may be detected by the wearable device 102, which may allow the processor 108 to recognize a type of lighting device 120 based on the sound signature.

It should be noted that the above-mentioned embodiments are examples of installation characteristics that may be detected by the detection unit 104, and that those skilled in the art will be able to design many alternative examples of detection units 104 of the wearable device 102 for detecting many alternative types of installation characteristics, such as light level, distance from walls/ceiling/floor, temperature, moisture, time of day, weather conditions, etc.

The receiver 106 of the system 100 is arranged for receiving an identifier of the lighting device 120. The receiver 106 may be comprised in the wearable device 102 or in any other device (e.g. a smartphone, a hub, a laptop, etc.). The identifier may comprise a code generated by the lighting device 120, or the code may be generated by the processor 108 of the system 100. Additionally or alternatively, the identifier may comprise information about the type of lighting device 120 (e.g. that the lighting device 120 is an LED strip or an LED light bulb). Additionally or alternatively, the identifier may comprise a unique product identifier and/or comprise the serial number of the lighting device 120.

In an embodiment, the receiver 106 may be comprised in a smart phone that is connected to the lighting device 120 via, for example, Wi-Fi or Bluetooth. The receiver 106 may receive the identifier of the lighting device 120 from the lighting device 120 via for example a wireless (radio) signal, for example via Wi-Fi, Bluetooth, ZigBee, etc. The receiver 106 may further communicate the identifier of the lighting device 120 to the processor 108, which may also be comprised in the smart phone.

In an embodiment, the receiver 106 may be comprised in an intermediate communication device, for example a home automation system. The receiver 106 may receive the identifier of the lighting device 120 from the lighting device 120 via an electronic signal. The identifier may be received via a wired connection, for example via power-line communication. The receiver 106 may further communicate the identifier of the lighting device 120 to the processor 108 of the home automation system which stores the installation characteristic of the lighting device 120 linked to its identifier.

In an embodiment, the receiver 106 may be comprised in the wearable device 102. The receiver 106 may, for example, receive the identifier from the lighting device 120 via a coded light signal from the lighting device 120. The coded light may be visible or invisible. Upon installing the lighting device 120, the lighting device 120 may emit light comprising a code, the code comprising the identifier of the lighting device 120. The receiver 106 may, for example, comprise a light sensor and/or a camera arranged for detecting the light emission and for detecting the code. The receiver 106 may further communicate the identifier of the lighting device 120 to the processor 108, which may be comprised in the wearable device 102 or in a further device. Additionally or alternatively, the receiver 106 may receive the identifier from the lighting device 120 via a sound signal. The sound may be generated by the lighting device 120 or the sound may be generated when the lighting device 120 is physically connected to its socket. The physical connection of the lighting device 120 to its socket may generate a distinguishing sound signature that may be detected by receiver 106, thereby identifying the lighting device 120.

The processor 108 of the system 100 is arranged for determining at least one installation characteristic of the lighting device 120 based on the detected contextual information of the wearable device 102, and for linking the at least one installation characteristic to the identifier. The processor 108 may be comprised in the wearable device 102, or the processor 108 may be comprised in a further device (e.g. a smartphone, a hub, a laptop, etc.). The processor 108 is connected to the memory 110 and it may store, upon determining the installation characteristic of the lighting device 120 and upon receiving the identifier of the lighting device 120 from the receiver 106, the at least one installation characteristic and the identifier in the memory 110. The memory 110 may be located in the wearable device 102 or in a further device, for example in a home automation system or in the lighting device 120 itself. The home automation system may use the commissioning information of the system 100 for, for example, atmosphere creation (based on, for example, user preferences, user instructions or system commands).

In an embodiment of the system 100, the processor 108 is further arranged for activating and deactivating a commissioning mode of the wearable device 102. The commissioning mode is a mode of operation wherein the processor 108 is set to determine the at least one installation characteristic of the lighting device 120 based on the detected contextual information of the wearable device 102, and wherein the processor 108 is set to link the at least one installation characteristic to the identifier. The commissioning mode may be turned off and on in between the commissioning of two lighting devices 120, thereby allowing the system 100 to differentiate between lighting devices 120. The commissioning mode may be activated and or deactivated based on the contextual information of the wearable device 102 detected by the detection unit 104. For example, the commissioning mode may be activated upon detecting a distinguishing movement of the wearable device 102. The movement may be, for example, a rotational movement, indicating the installation of a light bulb. Another trigger that may be used to initialize the commissioning mode is a sound signal generated when the lighting device 120 is physically connected to its socket. The connection may generate a distinguishing sound signature that may be detected by the detection unit 104, whereupon the processor 108 may activate the commissioning mode. The commissioning mode may be deactivated based on different contextual information detected by the detection unit 104. For example, when a lighting device 120 is installed in the ceiling, a decrease in altitude of the wearable device 102 may be an indicator that a person is descending (for example from a ladder) and therefore may be finished installing the lighting device 120.

Additionally or alternatively, the commissioning mode may be activated or deactivated based on a user input. The system 100 may further comprise a user interface arranged for receiving the user input. The user interface may comprise a touch-sensitive device such as a touchpad or a touchscreen, an audio sensor such as a microphone, a motion sensor such as an accelerometer and/or a gyroscope for detecting gestures and/or one or more buttons for receiving the user input. The person commissioning the lighting device 120 may for example execute a first movement with the wearable device 102 that is indicative of the activation of the commissioning mode, while the execution of a second movement may be indicative of the deactivation. In other examples, the user may speak a voice command to activate/deactivate the commissioning mode, activate/deactivate the commissioning mode via the touchscreen of the user interface and/or press a button to activate/deactivate the commissioning mode. It should be noted that above-mentioned triggers for activation/deactivation of the commissioning mode are examples, and that those skilled in the art will be able to design many alternative examples of triggers for activation/deactivation of the commissioning mode.

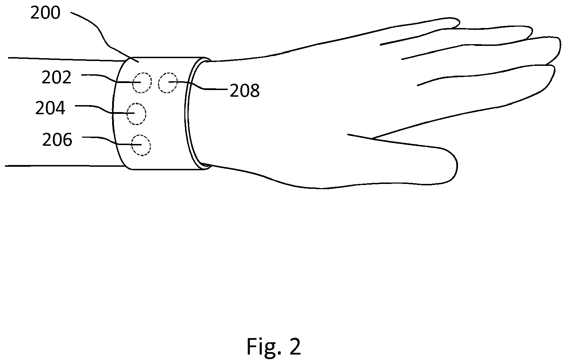

Fig. 2 shows schematically an embodiment of a wearable device 200 according to the invention for commissioning a lighting device (not shown). The wearable device 200 comprises the detection unit 202 arranged for detecting contextual information of the wearable device 200. Fig. 2 shows a wrist worn wearable device 200, but the wearable device 200 may also be worn on the forearm, head, neck, hand, finger, etc. of a user installing the lighting device. Additionally, the wearable device 200 may further comprise the receiver 204 arranged for receiving the identifier from the lighting device. The receiver 204 may, for example, comprise a radio frequency (RF) receiver in order to receive an RF signal. The RF receiver may be arranged for transmitting an RF signal requesting an RF response signal comprising the identifier from the lighting device. Alternatively, the wearable device 200 may comprise an RF transceiver arranged for transmitting an RF signal and for receiving the transmitted RF signal after it has been backscattered by the RFID tag of the lighting device, enabling the wearable device 200 to identify the lighting device based on the backscattered signal. Additionally or alternatively, the wearable device 200 may comprise a light sensor or a camera arranged for receiving light emitted by the lighting device. The emitted light may comprise a code, the code comprising an identifier of the lighting device, which may be decoded by the processor, thereby identifying the lighting device.

In a further embodiment, the receiver 204 of the wearable device is further arranged for determining the proximity/distance of the lighting device. Various proximity/distance measuring methods that are known in the art may be used. Distance information can be acquired through for example measuring the received signal strength (RSS), wherein the distance is determined based on an RF signal backscattering from a receiving tag, or through time-of-flight (TOF), wherein the distance is determined based on the time between sending and receiving the RF signal. An advantage of determining the proximity/distance between the wearable device 200 and the lighting device is that the processor may determine the accuracy of the determination of at least one installation characteristic of the lighting device.

In an additional or alternative embodiment, the wearable device 200 may further comprise the processor 206 arranged for determining the at least one installation characteristic of the lighting device based on the detected contextual information of the wearable device 200, and for linking the at least one installation characteristic to the identifier. Additionally or alternatively, the wearable device 200 may further comprise the memory 208 arranged for storing the at least one installation characteristic and the identifier. Many consumer wearable devices are already equipped with a processing means, a communication means, a detection means and/or a memory, which may be advantageous because it may reduce the effort of creating a communication link between the different components of the system.

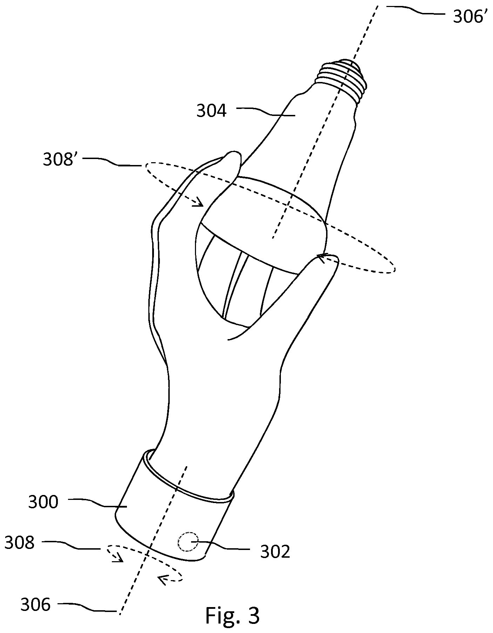

Fig. 3 shows schematically an embodiment of a wrist worn wearable device 300 according to the invention for commissioning a bulb lighting device 304. The detection unit 302 detects the orientation 306 and the movement 308 of the wearable device 300. The processor (not shown) may derive the orientation 306'of the lighting device 304 from the orientation 306 of the wearable device 300 and determine that the orientation 306 of the wearable device 300 does not change while installing (screwing in) the lighting device 304. Furthermore, the processor (not shown) may derive the movement 308'of the lighting device 304 from the rotational movement 308 of the wearable device 300. The processor may further use the rotational movement 308 of the wearable device 300 (and therewith the movement 308' of the lighting device 304) and the non-changing orientation 306, 306' to determine that the type of lighting device 304 is a screwable lighting device.

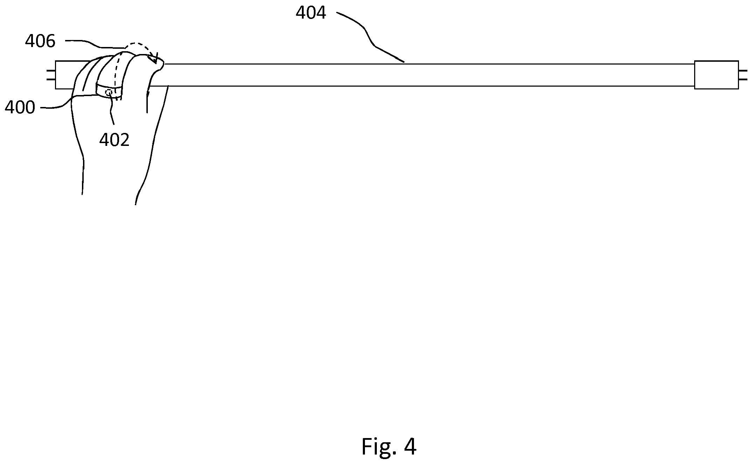

Fig. 4 shows schematically an embodiment of a finger worn wearable device 400 according to the invention for commissioning a tube lighting device 404. The detection unit 402 detects the orientation 406 and the movement 406 of the wearable device 400. Upon installing the lighting device 404, the orientation 406 of the wearable device 400 changes while installing the lighting device. The change of orientation 406 and the half turn of the wearable device 400 may provide sufficient information for the processor (not shown) to determine that the lighting device 404 is a tube lighting device 404, for example a fluorescent tube or a TLED.

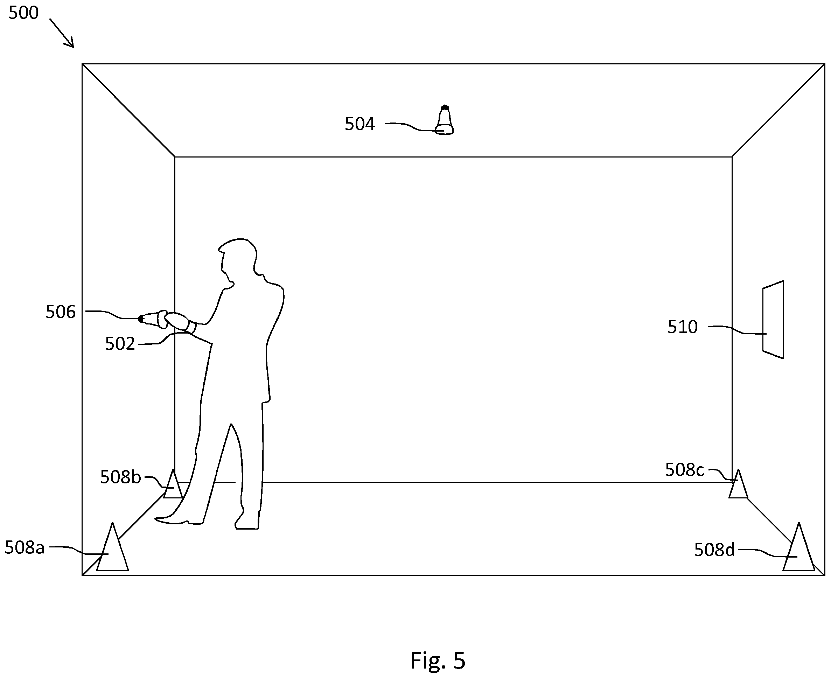

Fig. 5 shows schematically an embodiment of a system 500 according to the invention for commissioning lighting devices 504, 506 by a wearable device 502. The system 500 further comprises a positioning system 508a-d. Fig. 5 illustrates how the processor (which may be located in the wearable device 502, in the home automation terminal 510 or in any other device) may determine the installation characteristics based on the contextual information detected by the wearable commissioning device 502. In this embodiment, the positioning system 508a-d comprises a plurality of RF beacons 508a-d distributed throughout the room that communicate with the wearable device 502 and, based on the time-of-flight of the RF signals, the positioning system uses triangulation to determine the location of the wearable device 502. In this embodiment, the location, altitude and orientation are detected by the detection unit (not shown). The installation characteristics of a first lighting device 504 in Fig. 5 indicate that the lighting device 504 is located in the ceiling (based on the altitude from an altitude sensor of the wearable device 502 and the orientation from a direction sensor of the wearable device 502) and that it is located in the center of the room (based on the positioning information from the beacons 508a-d). The installation characteristics of a second lighting device 506 indicate that the lighting device 506 is installed in/on a wall (based on the altitude from an altitude sensor of the wearable device 502 and the orientation from a direction sensor of the wearable device 502) and that it is located at the side of the room (based on the positioning information from the beacons 508a-d). Upon completion of the commissioning of each lighting device 504, 506, the installation characteristics of the first 504 and second lighting device 506 may be stored in a memory located, for example, in the wearable device 502, the home automation terminal 510 (e.g. a pc that is arranged for controlling the lighting devices) or in the lighting devices 504, 506, whereafter the first 504 and second lighting device 506 are ready to be controlled.

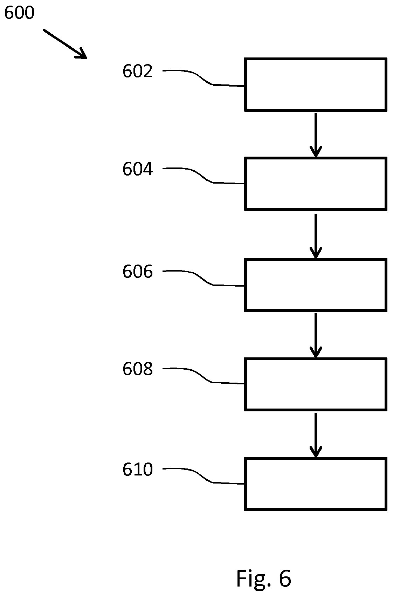

Fig. 6 shows schematically and exemplary a method 600 of commissioning a lighting device 120 by a wearable device 102 when installing the lighting device 120. The method comprises the steps of:
- receiving 602 an identifier of the lighting device 120,
- detecting 604 contextual information of the wearable device 102, the contextual information being an orientation and/or a movement of the wearable device 102,
- determining 606 at least one installation characteristic of the lighting device 120 based on the detected contextual information of the wearable device 102,
- linking 608 the at least one installation characteristic to the identifier, and
- storing 610 the at least one installation characteristic and the identifier. The step of receiving 602 an identifier of the lighting device 120 and the step of detecting 604 contextual information of the wearable device 102 are interchangeable and the order wherein these steps occur may depend on the specific embodiment. For example, installing a light bulb may require that the detection unit 104 of the wearable device 102 detects the rotational movement before the light bulb receives its power and may transmit its identifier. In a second example, the lighting device 120 may comprise an RF identification tag, which may be detected by the detection unit 104 of the wearable device 102 before the lighting device 120 in installed.

In an embodiment of the method 600, the method 600 further comprises the step of grouping a first lighting device with a second lighting device if the first lighting device and the second lighting device have a similar installation characteristic. This allows grouping, for example, ceiling lighting devices, or lighting devices that are located nearby each other. For example, an occupancy sensor may be grouped with luminaires in its vicinity. This embodiment further provides the advantage that sensing lighting device (such as an ultrasound motion detector) may be grouped with a light emitting lighting device (such as a light bulb). Furthermore, all lighting devices in a same room may be grouped in order to control all these lighting devices as one after commissioning.

It should be noted that the above-mentioned embodiments illustrate rather than limit the invention, and that those skilled in the art will be able to design many alternative embodiments without departing from the scope of the appended claims.

## Claims

1. A system (100) for commissioning a lighting device by a wearable device (102) when installing the lighting device, which wearable device (102) is arranged to be worn on at least one of the group comprising a forearm, a wrist, a hand and a finger of a user installing the lighting device, the system (100) comprising:
- the wearable device (102) comprising a detection unit (104) arranged for detecting contextual information of the wearable device (102), the contextual information being indicative of an orientation and/or a movement of the wearable device (102),
- a receiver (106) arranged for receiving an identifier of the lighting device, **characterized by** the system further comprising
- a processor (108) arranged for determining at least one installation characteristic of the lighting device based on the detected contextual information of the wearable device (102), and for linking the at least one installation characteristic to the identifier, and
- a memory (110) arranged for storing the at least one installation characteristic and the identifier.

2. The system (100) of any one of the preceding claims, the system (100) further comprising a positioning system, wherein the wearable device (102) is further arranged for receiving positional information from the positioning system, and wherein the processor (108) is arranged for determining the location of the lighting device as the contextual information based on the received positional information.

3. The system (100) of any one of the preceding claims, wherein the detection unit (104) of the wearable device (102) comprises an altitude detector for determining the vertical location of the lighting device, and wherein the processor (108) is arranged for determining the at least one installation characteristic based on the vertical location.

4. The system (100) of any one of the preceding claims, wherein the processor (108) is arranged for determining a type of the lighting device based on the at least one installation characteristic.

5. The system (100) of any one of the preceding claims, wherein the processor (108) is further arranged for activating and deactivating a commissioning mode of the wearable device (102), the commissioning mode being a mode of operation wherein the processor (108) is set to determine the at least one installation characteristic of the lighting device based on the detected contextual information of the wearable device (102), and wherein the processor (108) is set to link the at least one installation characteristic to the identifier.

6. The system (100) of claim 5, wherein the processor (108) is arranged for activating and/or deactivating the commissioning mode based on the contextual information of the wearable device (102) detected by the detection unit (104).

7. The system (100) of claim 5 or 6, wherein the system (100) further comprises a user interface arranged for receiving user input, and wherein the processor (108) is further arranged for activating the commissioning mode based on a first user input, and wherein the processor (108) is further arranged for deactivating the commissioning mode based on a second user input.

8. The system (100) of any one of the preceding claims, wherein the receiver (106) is arranged for receiving the identifier of the lighting device from the lighting device via at least one of the group comprising: an electronic signal, a coded light signal, a radio signal and a sound signal.

9. A method (600) of commissioning a lighting device by a wearable device (102) when installing the lighting device, which wearable device (102) is arranged to be worn on at least one of the group comprising a forearm, a wrist, a hand and a finger of a user installing the lighting device, the method (600) comprising the steps of:
- receiving (602) an identifier of the lighting device,
- detecting (604) contextual information of the wearable device (102), the contextual information being an orientation and/or a movement of the wearable device (102), said method **characterized by**
- determining (606) at least one installation characteristic of the lighting device based on the detected contextual information of the wearable device (102),
- linking (608) the at least one installation characteristic to the identifier, and
- storing (610) the at least one installation characteristic and the identifier.

10. The method (600) of claim 9 further comprising the step of grouping a first lighting device with a second lighting device if the first lighting device and the second lighting device have a similar installation characteristic.

11. A computer program product for a computing device, the computer program product comprising computer program code to perform the method of claim 9 or 10 when the computer program product is run on a processing unit of the computing device.

## Patentansprüche

1. System (100) zur Inbetriebnahme einer Beleuchtungsvorrichtung durch ein tragbares Gerät (102) bei Installieren der Beleuchtungsvorrichtung, wobei das tragbare Gerät (102) so vorgesehen ist, dass es zumindest an einem der Gruppen, umfassend einen Unterarm, ein Handgelenk, eine Hand sowie einen Finger eines die Beleuchtungsvorrichtung installierenden Benutzers, getragen wird, wobei das System (100) umfasst:
- das tragbare Gerät (102) mit einer Detektionseinheit (104), die so eingerichtet ist, dass sie zusammenhangsbezogene Informationen des tragbaren Geräts (102) detektiert, wobei die zusammenhangsbezogenen Informationen für eine Ausrichtung und/oder eine Bewegung des tragbaren Geräts (102) bezeichnend sind,
- einen Empfänger (106), der so eingerichtet ist, dass er eine Kennung der Beleuchtungsvorrichtung empfängt,
**dadurch gekennzeichnet, dass** das System weiterhin umfasst:
- einen Prozessor (108), der so eingerichtet ist, dass er mindestens eine Installationscharakteristik der Beleuchtungsvorrichtung aufgrund der detektierten zusammenhangsbezogenen Informationen des tragbaren Geräts (102) ermittelt, und die mindestens eine Installationscharakteristik mit der Kennung verbindet, sowie
- einen Speicher (110), der zur Speicherung der mindestens einen Installationscharakteristik und der Kennung eingerichtet ist.

2. System (100) nach einem der vorangegangenen Ansprüche, wobei das System (100) weiterhin ein Positionierungssystem umfasst, wobei das tragbare Gerät (102) des Weiteren so eingerichtet ist, dass es Positionsinformationen von dem Positionierungssystem empfängt, und wobei der Prozessor (108) so eingerichtet ist, dass er die Position der Beleuchtungsvorrichtung als die zusammenhangsbezogenen Informationen aufgrund der empfangenen Positionsinformationen ermittelt.

3. System (100) nach einem der vorangegangenen Ansprüche, wobei die Detektionseinheit (104) des tragbaren Geräts (102) einen Höhendetektor zum Ermitteln der vertikalen Position der Beleuchtungsvorrichtung umfasst, und wobei der Prozessor (108) so eingerichtet ist, dass er die mindestens eine Installationscharakteristik aufgrund der vertikalen Position ermittelt.

4. System (100) nach einem der vorangegangenen Ansprüche, wobei der Prozessor (108) so eingerichtet ist, dass er einen Typ der Beleuchtungsvorrichtung aufgrund der mindestens einen Installationscharakteristik ermittelt.

5. System (100) nach einem der vorangegangenen Ansprüche, wobei der Prozessor (108) weiterhin so eingerichtet ist, dass er einen Inbetriebnahmemodus des tragbaren Geräts (102) aktiviert und deaktiviert, wobei der Inbetriebnahmemodus ein Betriebsmodus ist, wobei der Prozessor (108) so eingestellt ist, dass er die mindestens eine Installationscharakteristik der Beleuchtungsvorrichtung aufgrund der detektierten, zusammenhangsbezogenen Informationen des tragbaren Geräts (102) ermittelt, und wobei der Prozessor (108) so eingestellt ist, dass er die mindestens eine Installationscharakteristik mit der Kennung verbindet.

6. System (100) nach Anspruch 5, wobei der Prozessor (108) so eingerichtet ist, dass er den Inbetriebnahmemodus aufgrund der von der Detektionseinheit (104) detektierten, zusammenhangsbezogenen Informationen des tragbaren Geräts (102) aktiviert und/oder deaktiviert.

7. System (100) nach Anspruch 5 oder 6, wobei das System (100) weiterhin eine Benutzerschnittstelle umfasst, die so eingerichtet ist, dass sie eine Benutzereingabe empfängt, und wobei der Prozessor (108) weiterhin so eingerichtet ist, dass er den Inbetriebnahmemodus aufgrund einer ersten Benutzereingabe aktiviert, und wobei der Prozessor (108) weiterhin so eingerichtet ist, dass er den Inbetriebnahmemodus aufgrund einer zweiten Benutzereingabe deaktiviert.

8. System (100) nach einem der vorangegangenen Ansprüche, wobei der Empfänger (106) so eingerichtet ist, dass er die Kennung der Beleuchtungsvorrichtung von der Beleuchtungsvorrichtung über mindestens eine der Gruppen empfängt, umfassend: ein elektronisches Signal, ein codiertes Lichtsignal, ein Funksignal sowie ein Tonsignal.

9. Verfahren (600) zur Inbetriebnahme einer Beleuchtungsvorrichtung durch ein tragbares Gerät (102) bei Installieren der Beleuchtungsvorrichtung, wobei das tragbare Gerät (102) so vorgesehen ist, dass es zumindest an einem der Gruppen, umfassend einen Unterarm, ein Handgelenk, eine Hand sowie einen Finger eines die Beleuchtungsvorrichtung installierenden Benutzers, getragen wird, wobei das Verfahren (600) die folgenden Schritte umfasst, wonach:
- eine Kennung der Beleuchtungsvorrichtung empfangen wird (602),
- zusammenhangsbezogene Informationen des tragbaren Geräts (102) detektiert werden (604), wobei die zusammenhangsbezogenen Informationen eine Ausrichtung und/oder eine Bewegung des tragbaren Geräts (102) darstellen,
wobei das Verfahren dadurch gekennzeichent ist, dass
- mindestens eine Installationscharakteristik der Beleuchtungsvorrichtung aufgrund der detektierten, zusammenhangsbezogenen Informationen des tragbaren Geräts (102) ermittelt wird (606),
- die mindestens eine zusammenhangsbezogene Installationscharakteristik mit der Kennung verbunden wird (608), und
- die mindestens eine Installationscharakteristik und die Kennung gespeichert werden (610).

10. Verfahren (600) nach Anspruch 9, das weiterhin den Schritt des Gruppierens einer ersten Beleuchtungsvorrichtung mit einer zweiten Beleuchtungsvorrichtung umfasst, wenn die erste Beleuchtungsvorrichtung und die zweite Beleuchtungsvorrichtung eine ähnliche Installationscharakteristik aufweisen.

11. Computerprogrammprodukt für ein Computergerät, wobei das Computerprogrammprodukt einen Computerprogrammcode umfasst, um das Verfahren nach Anspruch 9 oder 10 durchzuführen, wenn das Computerprogrammprodukt auf einer Verarbeitungseinheit des Computergeräts abläuft.

## Revendications

1. Système (100) pour mettre en service un dispositif d'éclairage par un dispositif extracorporel (102) en installant le dispositif d'éclairage, lequel dispositif extracorporel (102) est agencé pour être porté sur au moins l'un du groupe comprenant un avant-bras, un poignet, une main et un doigt d'un utilisateur installant le dispositif d'éclairage, le système (100) comprenant :
- le dispositif extracorporel (102) comprenant une unité de détection (104) agencée pour détecter des informations contextuelles du dispositif extracorporel (102), les informations contextuelles étant indicatives d'une orientation et/ou d'un mouvement du dispositif extracorporel (102),
- un récepteur (106) agencé pour recevoir un identificateur du dispositif d'éclairage, **caractérisé par** le système comprenant en outre
- un processeur (108) agencé pour déterminer au moins une caractéristique d'installation du dispositif d'éclairage sur la base des informations contextuelles détectées du dispositif extracorporel (102), et pour lier l'au moins une caractéristique d'installation à l'identificateur, et
- une mémoire (110) agencée pour stocker l'au moins une caractéristique d'installation et l'identificateur.

2. Système (100) selon l'une quelconque des revendications précédentes, le système (100) comprenant en outre un système de positionnement, dans lequel le dispositif extracorporel (102) est en outre agencé pour recevoir des informations positionnelles en provenance du système de positionnement, et dans lequel le processeur (108) est agencé pour déterminer l'emplacement du dispositif d'éclairage en tant qu'informations contextuelles sur la base des informations positionnelles reçues.

3. Système (100) selon l'une quelconque des revendications précédentes, dans lequel l'unité de détection (104) du dispositif extracorporel (102) comprend un détecteur d'altitude pour déterminer l'emplacement vertical du dispositif d'éclairage, et dans lequel le processeur (108) est agencé pour déterminer l'au moins une caractéristique d'installation sur la base de l'emplacement vertical.

4. Système (100) selon l'une quelconque des revendications précédentes, dans lequel le processeur (108) est agencé pour déterminer un type du dispositif d'éclairage sur la base de l'au moins une caractéristique d'installation.

5. Système (100) selon l'une quelconque des revendications précédentes, dans lequel le processeur (108) est en outre agencé pour activer et désactiver un mode de mise en service du dispositif extracorporel (102), le mode de mise en service étant un mode de fonctionnement dans lequel le processeur (108) est réglé pour déterminer l'au moins une caractéristique d'installation du dispositif d'éclairage sur la base des informations contextuelles détectées du dispositif extracorporel (102), et dans lequel le processeur (108) est réglé pour lier l'au moins une caractéristique d'installation à l'identificateur.

6. Système (100) selon la revendication 5, dans lequel le processeur (108) est agencé pour activer et/ou désactiver le mode de mise en service sur la base des informations contextuelles du dispositif extracorporel (102) détectées par l'unité de détection (104).

7. Système (100) selon la revendication 5 ou 6, dans lequel le système (100) comprend en outre une interface utilisateur agencée pour recevoir une entrée utilisateur, et dans lequel le processeur (108) est en outre agencé pour activer le mode de mise en service sur la base d'une première entrée utilisateur, et dans lequel le processeur (108) est en outre agencé pour désactiver le mode de mise en service sur la base d'une seconde entrée utilisateur.

8. Système (100) selon l'une quelconque des revendications précédentes, dans lequel le récepteur (106) est agencé pour recevoir l'identificateur du dispositif d'éclairage en provenance du dispositif d'éclairage via au moins l'un du groupe comprenant : un signal électronique, un signal de lumière codé, un signal radio et un signal sonore.

9. Procédé (600) de mise en service d'un dispositif d'éclairage par un dispositif extracorporel (102) en installant le dispositif d'éclairage, lequel dispositif extracorporel (102) est agencé pour être porté sur au moins l'un du groupe comprenant un avant-bras, un poignet, une main et un doigt d'un utilisateur installant le dispositif d'éclairage, le procédé (600) comprenant les étapes de :
- réception (602) d'un identificateur du dispositif d'éclairage,
- détection (604) d'informations contextuelles du dispositif extracorporel (102), les informations contextuelles étant une orientation et/ou un mouvement du dispositif extracorporel (102), ledit procédé étant **caractérisé par**
- la détermination (606) d'au moins une caractéristique d'installation du dispositif d'éclairage sur la base des informations contextuelles détectées du dispositif extracorporel (102),
- la liaison (608) de l'au moins une caractéristique d'installation à l'identificateur, et
- le stockage (610) de l'au moins une caractéristique d'installation et de l'identificateur.

10. Procédé (600) selon la revendication 9 comprenant en outre l'étape de groupement d'un premier dispositif d'éclairage avec un second dispositif d'éclairage si le premier dispositif d'éclairage et le second dispositif d'éclairage ont une caractéristique d'installation similaire.

11. Produit formant programme informatique pour un dispositif informatique, le produit formant programme informatique comprenant un code de programme informatique pour effectuer le procédé selon la revendication 9 ou 10 quand le produit formant programme informatique est exécuté sur une unité de traitement du dispositif informatique.
